# NEW EUROPEAN PATENT SPECIFICATION

(11) **EP 0 373 489 B2**
(45) Date of publication and mention of the opposition decision: **15.12.1999**
(45) Mention of the grant of the patent: 29.11.1995
(21) Application number: 89122449.5
(22) Date of filing: 05.12.1989
(51) Int. Cl.: C08G 59/02

(54) **Concurrent addition process for preparing high purity epoxy resins**
Gleichzeitiges Zugabeverfahren für die Herstellung von sehr reinen Epoxydharzen
Procédé d'addition simultanée pour la préparation de résines époxydes extrêmement pures

(30) Priority: 12.12.1988 US 283400
(43) Date of publication of application: 20.06.1990
(73) Proprietor: THE DOW CHEMICAL COMPANY, Midland, Michigan 48674 (US)
(72) Inventor: Liao, Zeng-Kun, Lake Jackson Texas 77566 (US); Wang, Chun S., Lake Jackson Texas 77566 (US)
(74) Representative: Sternagel, Hans-Günther, Dr.

(56) References cited:
- EP-A- 0 264 760
- DE-A- 1 022 793
- DE-A- 1 091 749
- GB-A- 849 036
- GB-A- 880 423
- US-A- 2 848 435
- US-A- 3 790 602
- US-A- 4 499 255
- US-A- 4 778 863
- DATABASE WPIL, no. 85-065298, Derwent Publications Ltd, London, GB; & JP-A-60 020 926 (MITSUBISHI) 02-02-1985
- Houben-Weil, Vol. 14/2, 1963, S.468

## Description

The present invention relates to the preparation of high purity epoxy resins.

Epoxy resins, especially the o-cresol epoxy novolac resins, are widely used for semiconductor device encapsulation in the microelectronic industry. The major criteria for measuring quality of these resins are the level of total bound halogen and the epoxide content. Both factors have a great influence on the reliability of an encapsulated semiconductor device. Bound halogen are those halogens which are attached to a carbon atom which carbon atom is not adjacent to a carbon atom which has a hydroxyl group attached thereto. The following formulas A, B and C illustrate hydrolyzable halide and bound halide. Formula A is illustrative of a hydrolyzable halide whereas formulas B and C are illustrative of bound halides. 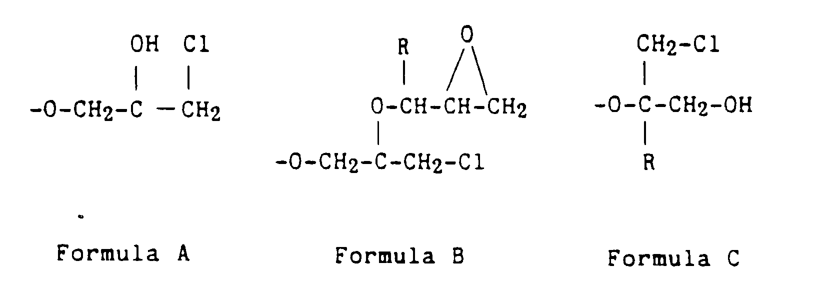 wherein R is hydrogen or a hydrocarbyl group.
U.S. Patent 4,499,255 to Wang et al. discloses that when suitable solvents such as 1-methoxy-2-hydroxy propane are used, epoxy resins low in hydrolyzable halide can be prepared by reacting an aromatic hydroxyl group-containing compound with an epihalohydrin at a pressure sufficient to co-distill water with solvent at a temperature of from 45°C to 80°C in the presence of an alkali metal hydroxide solution. The total bound halogen content of the epoxy resins produced by this process is still at an unacceptable level for some applications such as in the encapsulation of semiconductor devices.

Wang and Liao disclose in U.S. Patent 4,785,061 a post-treatment process for reducing the undesirable halide content of epoxy resins; however, the molecular weight distribution becomes broader after this post-treatment process which is considered to be undesirable by some semiconductor encapsulation formulators based on processing rheology. US Patent 4,778,863 to Wang et al. discloses including a polar aprotic solvent as a means of reducing the undesirable halogen content.

It would be desirable to be able to produce epoxy resins which are relatively low in bound halogen content and possess a relatively narrow molecular weight distribution for certain applications, such as the encapsulation of semiconductor devices.

The present invention pertains to an improvement in a process for preparing epoxy resins by reacting an epihalohydrin with one or more compounds having an average of more than one group reactive with a vicinal epoxide group per molecule in the presence of one or more solvents and an alkali or alkaline earth metal hydroxide or manganese hydroxide; wherein the improvement resides in adding, either concurrently and continuously or concurrently and intermittently, (1) a mixture of (a) epihalohydrin, (b) one or more compounds containing an average of more than one group reactive with a vicinal epoxide group and (c) one or more solvents; and (2) an organic or aqueous solution of one or more alkali or alkaline earth metal hydroxides or manganese hydroxide; to (3) a mixture containing epihalohydrin and one or more solvents.

In accordance with the invention a process for preparing epoxy resins is provided which are relatively low in bound halogen content and which possess a relatively narrow molecular weight distribution The process comprises adding, either concurrently and continuously or concurrently and intermittently,
(1) a mixture of (a) epihalohydrin, (b) one or more compounds having an average of more than one group reactive with a vicinal epoxide group and (c) one or more solvents; and
(2) a mixture of (d) one or more alkali or alkaline earth metal hydroxides or manganese hydroxide and (e) water or an organic solvent; to
(3) a mixture containing (f) an epihalohydrin and (g) one or more solvents; and
(4) reacting components (a,f) with component (b) in the presence of one or more solvents and component (d) while removing water from the reaction mixture by co-distillation of water, epihalohydrin and a solvent.

Regardless of which method of addition, continuously or intermittently, is employed herein, it is preferred that addition of mixture (1) be completed before completion of the addition of mixture (2). In this preferred method, the addition of mixture (1) is usually completed in from 30 to 95, preferably from 40 to 90, most preferably from 50 to 85 percent of the time required for the addition of mixture (2).

The term continuously means that the components are added without interruption from the time the addition is started until the addition is completed.

The term intermittently means that the addition is interrupted and that there is a time interval of less than about 20, preferably less than about 10, most preferably less than about 5 minutes between interruptions in the concurrent addition of mixture (1) and mixture (2) to mixture (3).

The process of the present invention is conveniently conducted at a temperature suitably from 20°C to 100°C, more suitably from 30°C to 80°C, most suitably from 40°C to 60°C; at a pressure suitably from 20 to 760, more suitably from 30 to 400, most suitably from 5.3 to 26.6 kPa (40 to 200 mm Hg absolute); for a time sufficient to complete the reaction. Usually, the higher temperatures require shorter reaction times whereas the lower temperatures require longer reaction times.

At temperatures below 20°C, the reaction proceeds very slowly.

At temperatures above 100°C, a pressurized reactor is required.

At pressures below 2.7 kPa (20 mm Hg absolute), low reaction temperatures result which results in extended reaction times.

At pressures above 101.1 kPa (760 mm Hg absolute), a pressurized reactor is required.

The epihalohydrin and the compound having groups reactive with a vicinal epoxide group are employed in amounts which provide a ratio of moles of epihalohydrin per group reactive with an epoxide group from 1:1 to 15:1, more suitably from 1.5:1 to 12:1, most suitably from 1.5:1 to 10:1.

At ratios below 1:1, complete reaction of the reactive group with the epihalohydrin cannot be achieved.

At ratios above 15:1, the productivity (capacity) of the reactor is reduced.

Suitable epihalohydrin compounds which can be employed herein include, for example, those compounds represented by the following formula I: 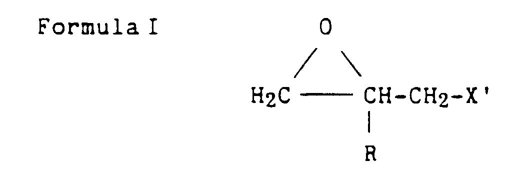 wherein R is hydrogen or a hydrocarbyl group containing from 1 to 4 carbon atoms and X' is a halogen, preferably chlorine. Particularly suitable epihalohydrin compounds employed herein include, for example, epichlorohydrin, epibromohydrin, epiiodohydrin, methylepichlorohydrin, methylepibromohydrin, methylepiiodohydrin and mixtures thereof.

Suitable compounds having an average of more than one group reactive with a vicinal epoxide group per molecule which can be employed herein include, for example but not limited to, those represented by the following formulas Il-VII: 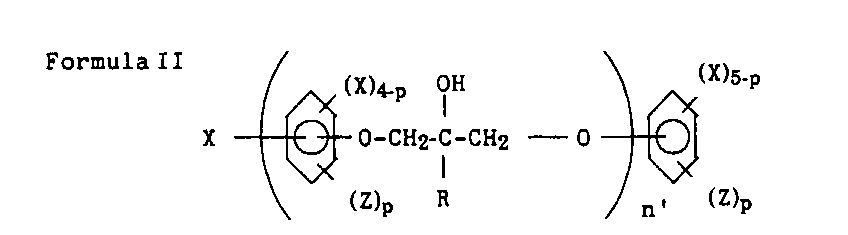 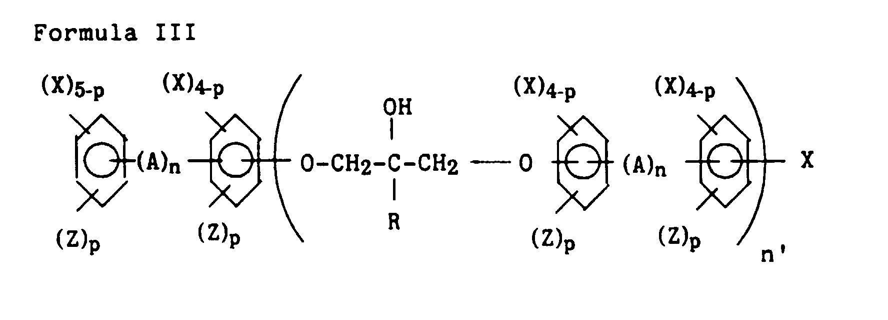 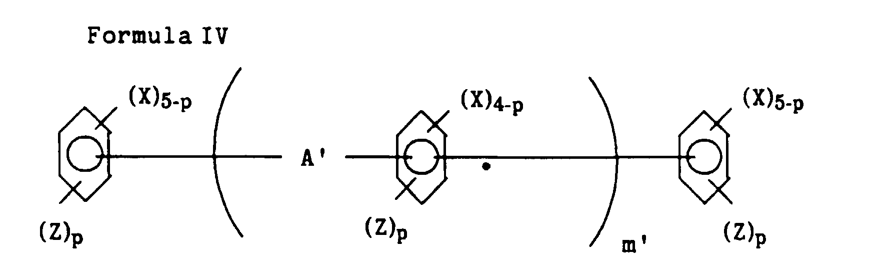 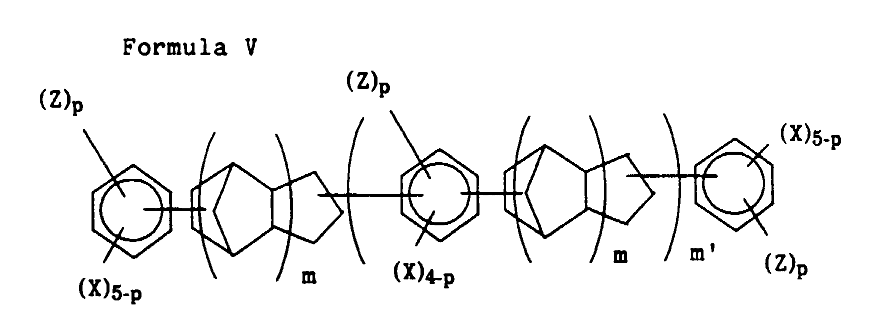 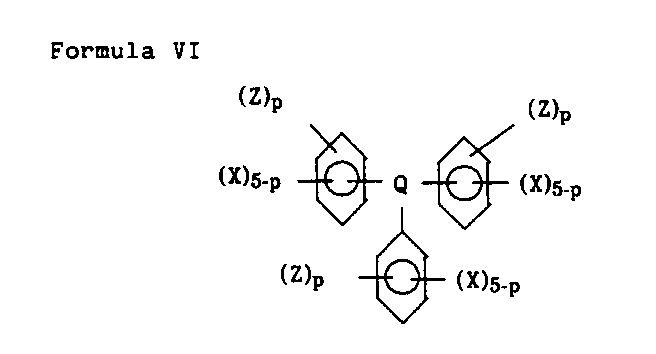 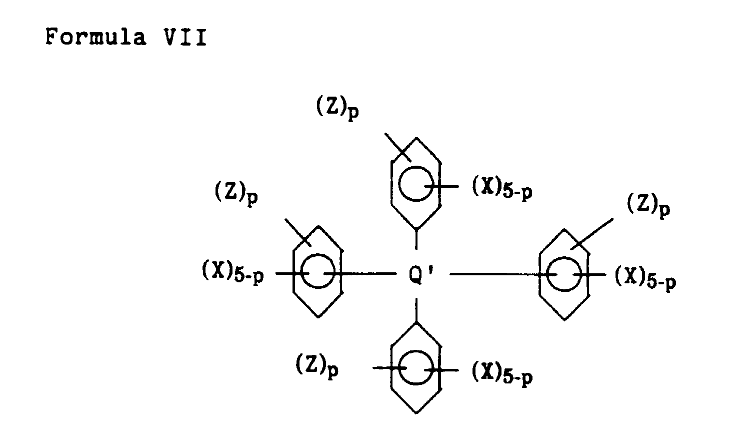 wherein each A is independently a divalent hydrocarbon group having suitably from 1 to 20, more suitably from 1 to 12, most suitably from 1 to 6 carbon atoms, -S-, -S-S-, -O-, -SO-, -SO₂-, or -CO-; each A' is independently a divalent hydrocarbon group having from 1 to 20, more suitably from 1 to 12, most suitably from 1 to 4 carbon atoms; Q is a trivalent aliphatic, cycloaliphatic, or aromatic hydrocarbon group having suitably from 1 to 12, more suitably from 1 to 6, most suitably from 1 to 4 carbon atoms; Q' is a tetravalent aliphatic, cycloaliphatic, or aromatic hydrocarbon group having suitably from 1 to 20, more suitably from 1 to 10, most suitably from 1 to 4 carbon atoms; each R is independently hydrogen or an alkyl group having from 1 to 4 carbon atoms; each X is independently hydrogen, a hydrocarbyl or hydrocarbyloxy group having suitably from 1 to 12, more suitably from 1 to 6, most suitably from 1 to 4 carbon atoms or a halogen atom, preferably chlorine or bromine; each Z is independently a hydroxyl, amino or carboxyl group; m has an average value suitably from 1 to 3, more suitably from 1 to 2; each m' has an average value suitably from 1 to 10, more suitably from 1 to 8, most suitably from 1 to 6; n has a value of zero or 1; n' has an average value suitably from zero to 10, more suitably from zero to 5, most suitably from zero to 1; and p suitably has a value of 1 or 2.

The term "hydrocarbyl" as employed herein means any aliphatic, cycloaliphatic, aromatic, aryl substituted aliphatic or cycloaliphatic, or aliphatic or cycloaliphatic substituted aromatic groups. The aliphatic groups can be saturated or unsaturated. Likewise, the term "hydrocarbyloxy" means a hydrocarbyl group having an oxygen linkage between it and the carbon atom to which it is attached.

Particularly suitable compounds containing an average of more than one group reactive with a vicinal epoxide group employed herein include, for example, resorcinol, catechol, hydroquinone, bisphenol A, bisphenol F, bisphenol K, bisphenol S, biphenol, 2,2',6,6'-tetramethylbiphenol, phenol formaldehyde novolac resins, cresol formaldehyde novolac resins, dicyclopentadiene phenol resins, dicyclopentadiene cresol resins, methylene dianiline, 2,2',4,4'-tetrahydroxybenzophenone, 1,1,2,2-tetrakis(2-hydroxyphenyl)ethane, tris-(phenol)-methine and combinations thereof.

Suitable alkali or alkaline earth metal hydroxides which can be employed herein include, for example, sodium hydroxide, potassium hydroxide, lithium hydroxide, barium hydroxide, calcium hydroxide, magnesium hydroxide and combinations thereof. Also suitably used in the present invention is manganese hydroxide either alone or in combination with the alkali or alkaline earth metal hydroxides.

The alkali or alkaline earth metal hydroxide scan be employed in solution with water or an organic solvent such as alcohols, sulfoxides or amides; for example, methanol, ethanol, isopropanol, dimethylsulfoxide, dimethylacetamide, or combinations thereof. Water is the preferred solvent for the alkali or alkaline earth metal hydroxide. The alkali or alkaline earth metal hydroxide solution is employed in a concentration suitably from 10 to 70, more suitably from 20 to 60, most suitably from 30 to 50 percent alkali or alkaline earth metal hydroxide by weight.

Suitable solvents which can be employed herein include, for example, ketones, linear cyclic ethers, primary, secondary and tertiary alcohols, glycol monoethers, glycol ether acetates, aromatic hydrocarbons, aliphatic hydrocarbon having from 6 to 12 carbon atoms and combinations thereof. Any of the aforementioned solvents can be employed herein so long as the solvent does not react with the components of the reaction mixture. In addition, the solvent should have a boiling point such that the solvent is not totally removed from the reaction mixture during co-distillation of the water, epihalohydrin and solvents. Particularly suitable such solvents employed herein include, 1-methoxy-2-hydroxy propane, 1-butoxy-2-hydroxy ethane, tert-amyl alcohol, tert-hexyl alcohol, 1-isobutoxy-2-hydroxy propane, 1-phenoxy-2-hydroxy propane, cyclohexanol, dioxane, 1,2-diethoxyethane, 2-methoxyethyl ether, ethylene glycol monomethyl ether acetate, ethyl acetate, isobutyl acetate, isoamyl acetate, methyl ethyl ketone, methyl isobutyl ketone, dimethyl sulfoxide, dimethyl acetamide, N-methylpyrrolidinone, dimethyl formamide, dimethylsulfone, tetramethyl urea, hexamethyl phosphoramide, tetramethylenesulfolane and combinations thereof.

The solvents are employed in amounts such that the amount of solvent (g) in the initial epihalohydrin solvent mixture (3) is suitably from 5 to 80, more suitably from 5 to 50, most suitably from 10 to 40 percent solvent based upon the combined weight of solvent (g) plus epihalohydrin (f).

The amount of solvent (c) in mixture (1) is suitably from 5 to 80, more suitably from 5 to 50, most suitably from 10 to 40 percent by weight based upon the combined weight of solvent (c), compound having an average of more than one group reactive with an epoxide group (b) and epihalohydrin (a).

The amount of compound having an average of more than one group reactive with an epoxide group (b) in mixture (1) is suitably from 5 to 75, more suitably from 10 to 50, most suitably from 10 to 40 percent by weight based upon the combined weight of solvent (c), compound having an average of more than one group reactive with an epoxide group (b) and epihalohydrin (a).

The amount of epihalohydrin (a) in mixture (1) is suitably from 10 to 90, more suitably from 20 to 80, most suitably from 30 to 70 percent by weight based upon the combined weight of solvent (c), compound having an average of more than one group reactive with an epoxide group (b) and epihalohydrin (a).

The process of the present invention can employ, if desired, the procedures for removing the water produced in the reaction by the procedure described by Wang et al. in U.S. Patent 4,499,255 or by Wang et al. in U.S. Patent 4,778,863, so long as the required procedures of the present invention are employed.

The following examples are illustrative of the invention.

### Examples 1-7

Into a 2-liter reaction vessel equipped with temperature and pressure control and indicating means, were added epichlorohydrin and 1-methoxy-2-hydroxy propane (propylene glycol methyl ether) with or without a second co-solvent as indicated in Table I. Equipment used for condensing, separating water from co-distillate mixture of water, solvent and epichlorohydrin was installed. After stirring the contents in the reaction vessel at room temperature and atmospheric pressure to thoroughly mix the contents, the temperature was raised to a temperature of 35°C to 50°C and the pressure was reduced in order to provide the co-distillate with a boiling point as indicated in Table I. To the resultant solution were added concurrently and continuously the polyphenol solution and the aqueous alkali metal hydroxide solution separately over a period of time indicated in Table I. The distillate was condensed, thereby forming two distinct phases, an aqueous phase (top) and an organic epichlorohydrin-solvents phase (bottom). The bottom layer was continuously returned to the reaction vessel. After finishing the addition of the sodium hydroxide solution, the mixture was digested at the boiling point for about 20 to 30 minutes. The salt was then removed by filtration, the excess epichlorohydrin and solvents were removed by distillation under vacuum. The resulting epoxy resin was dissolved in a 50/50 by weight mixture of methyl ethyl ketone/toluene. This epoxy resin-solvent mixture was washed with water successively to remove any remaining salt and was subsequently distilled to provide the resultant glycidyl ether product. The reactants, reaction conditions and results are given in Table I.

### Comparative Experiments A-G

Into a 2-liter reaction vessel equipped with temperature and pressure control and indicating means, means for condensing and separating water from a co-distillate mixture of water, epichlorohydrin and solvents was added an aromatic hydroxyl-containing compound, epichlorohydrin and solvent or dual solvents in the amounts indicated in Table I. After stirring the contents in the reaciton vessel at room temperature and atmospheric pressure to thoroughly mix the contents, the temperature was raised to a temperature of 35°C to 50°C and the pressure was reduced in order to provide the co-distillate with a boiling point as indicated in Table I. To the resultant solution was continuously added a 50 percent aqueous sodium hydroxide solution over a period of time as indicated in Table I. During the addition of the sodium hydroxide solution, the water was removed by co-distilling with epichlorohydrin and the solvents. The distillate was condensed, thereby forming two distinct phases, an aqueous phase (top) and an organic epichlorohydrin-solvents phase (bottom). The bottom layer was continuously returned to the reaction vessel. After finishing the addition of the sodium hydroxide solution, the mixture was digested at the boiling point for about 20 to 30 minutes. The salt was then removed by filtration, the excess epichlorohydrin and solvents were removed by distillation under vacuum. The resulting epoxy resin was dissolved in a 50/50 by weight mixture of methyl ethyl ketone/toluene. This epoxy resin-solvent mixture was washed with water successively to remove any remaining salt and was subsequently distilled to provide the resultant glycidyl ether product. The results are given in Table I.

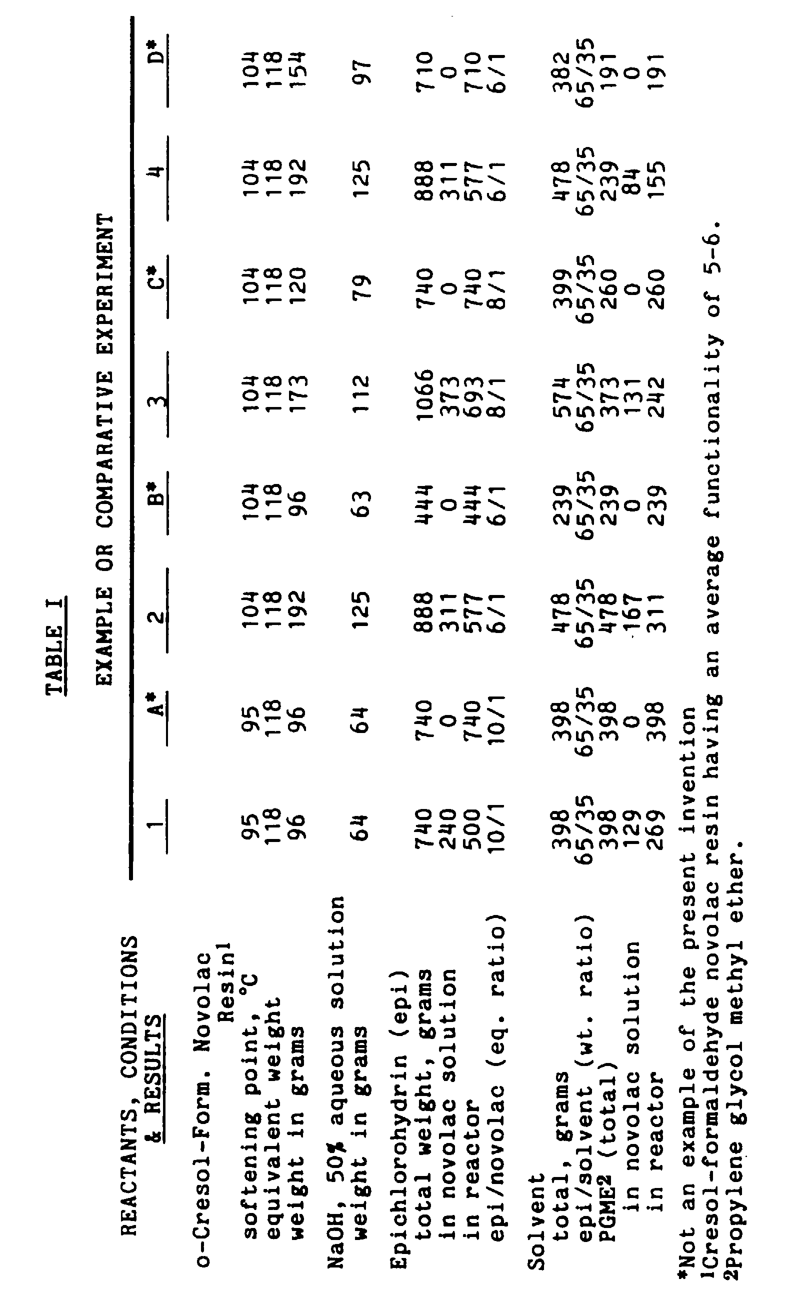

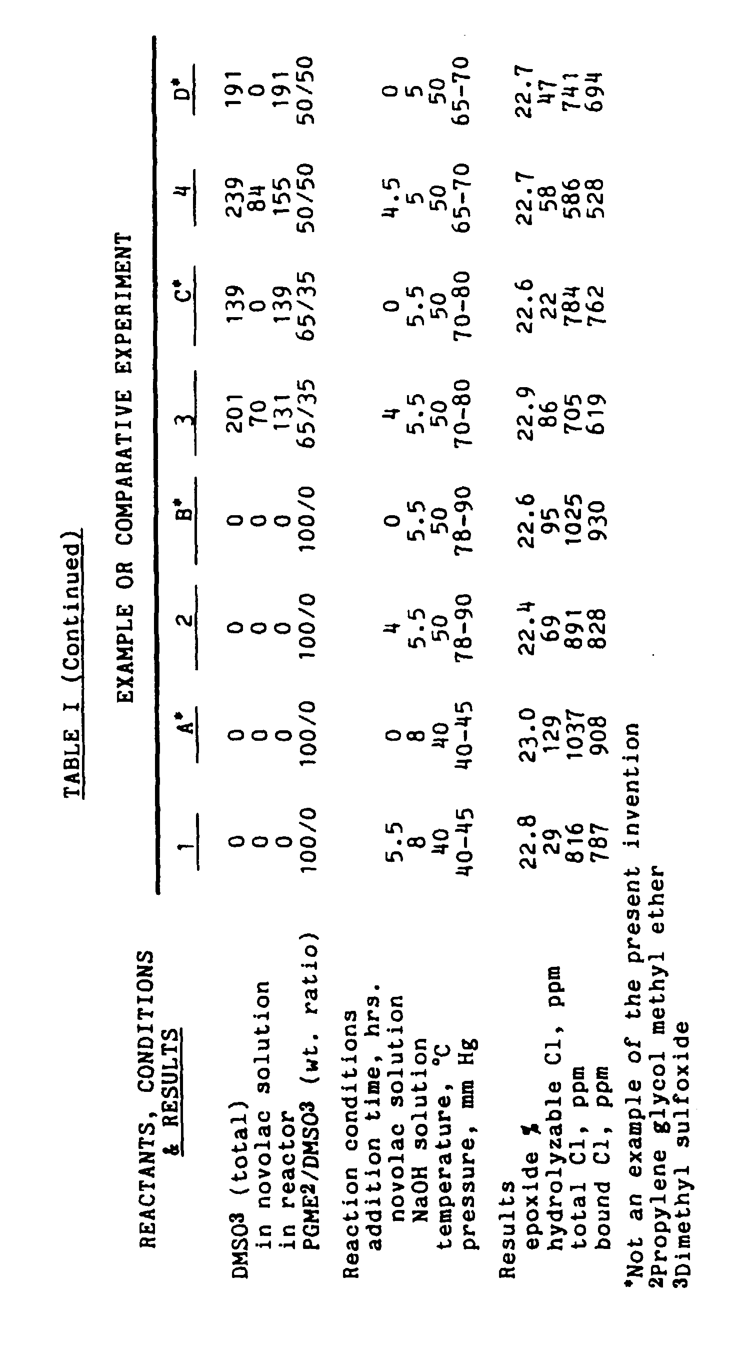

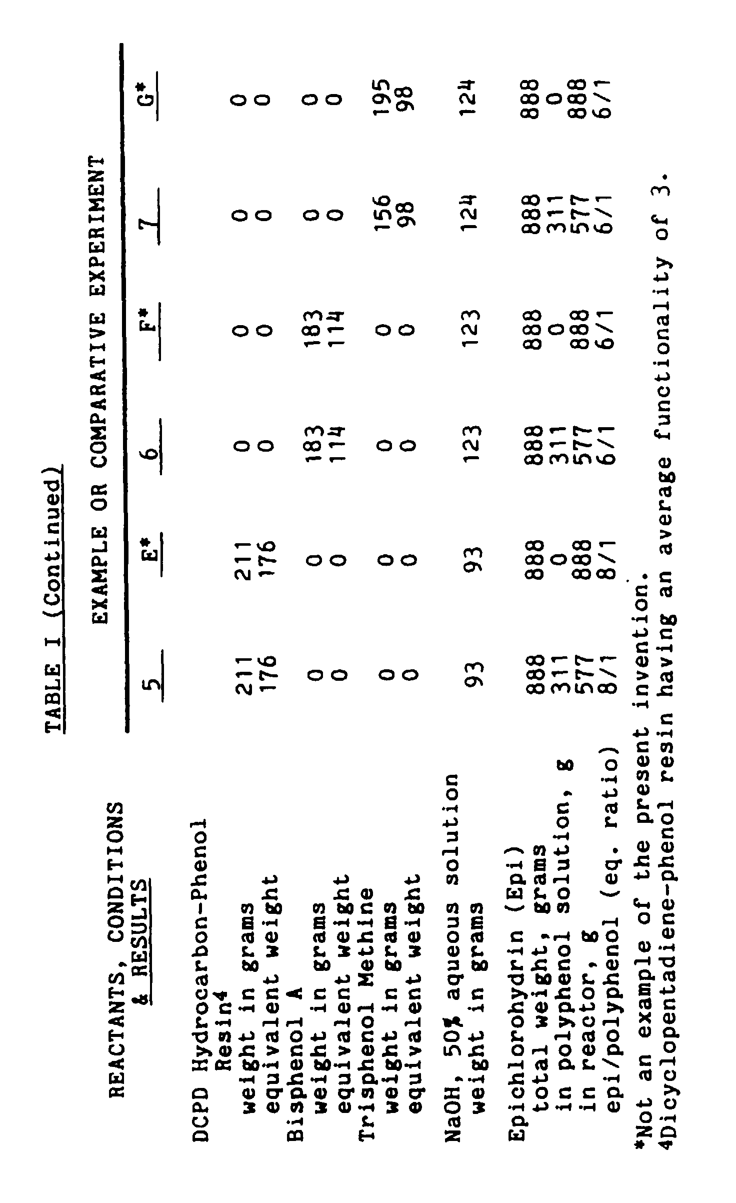

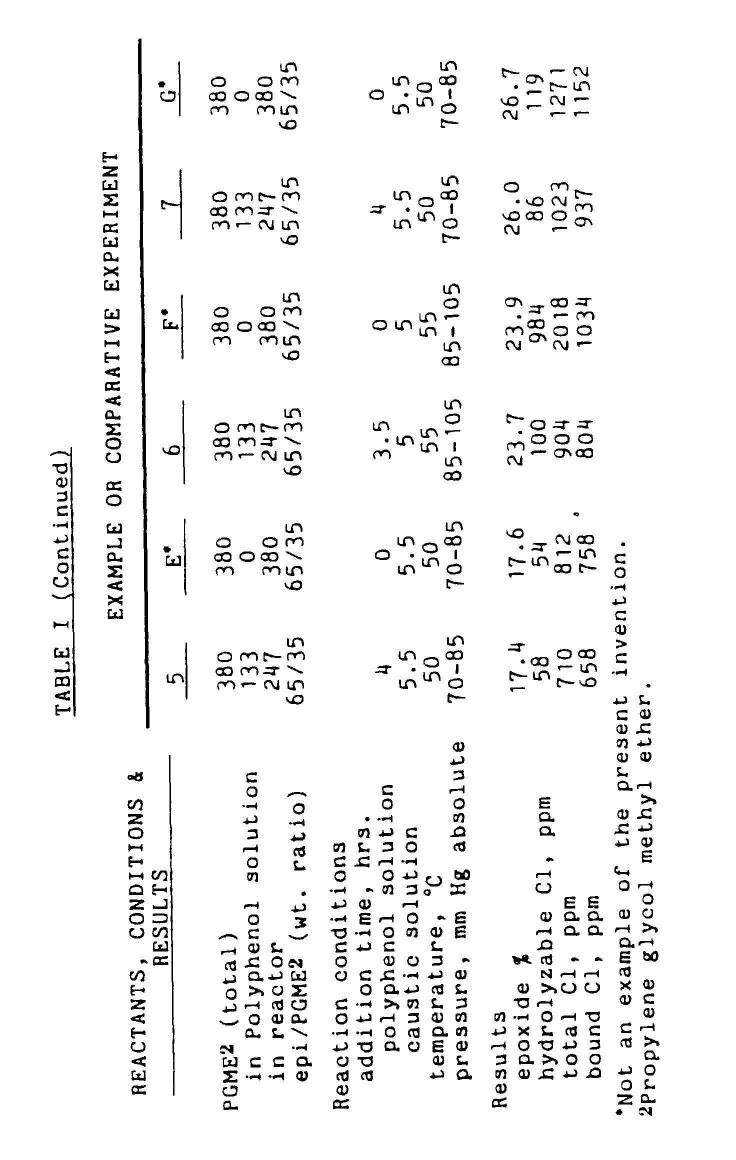

## Claims

1. A process for preparing epoxy resins which comprises adding, either concurrently and continuously or concurrently and intermittently,
(1) a mixture of (a) epihalohydrin, (b) one or more compounds having an average of more than one group reactive with a vicinal epoxide group and (c) one or more solvents; and
(2) a mixture of (d) one or more alkali or alkaline earth metal hydroxides or manganese hydroxide and (e) water or an organic solvent; to
(3) a mixture containing (f) an epihalohydrin and (g) one or more solvents; and
(4) reacting components (a,f) with component (b) in the presence of one or more solvents and component (d) while removing water from the reaction mixture by co-distillation of water, epihalohydrin and a solvent;
with the proviso that (i) the epihalohydrin and the compound having groups reactive with a vicinal epoxide group are employed in amounts which provide a ratio of moles of epihalohydrin per group reactive with an epoxide group from 1:1 to 15:1.

2. The process of Claim 1 wherein
(a) the concentration of the initial mixture (3) of epihalohydrin and solvent is from 20 to 95 percent by weight epihalohydrin based upon the combined weight of epihalohydrin and solvent;
(b) the concentration of epihalohydrin in the mixture (1) of epihalohydrin, one or more compounds having an average of more than one group reactive with a vicinal epoxide group and one or more solvents is from 10 to 90 percent by weight based upon the combined weight of the components in the mixture (1);
(c) the concentration of compound(s) having an average of more than one group reactive with a vicinal epoxide group in the mixture (1) of epihalohydrin, one or more compounds having an average of more than one group reactive with a vicinal epoxide group and one or more solvents is from 5 to 75 percent by weight based upon the combined weight of the components in the mixture (1);
(d) the concentration of solvent(s) in the mixture (1) of epihalohydrin, one or more compounds having an average of more than one group reactive with a vicinal epoxide group and one or more solvents is from 5 to 80 percent by weight based upon the combined weight of the components in the mixture (1);
(e) mixture (2) is an organic or aqueous solution of an alkali metal or alkaline earth metal hydroxide and the concentration of the alkali metal or alkaline earth metal hydroxide in the water or organic solvent is from 30 to 60 percent by weight based upon the combined weight of the components in the mixture (2);
(f) mixtures (1) and (2) are added concurrently and continuously to mixture (3).

3. The process of Claim 1 wherein
(a) the concentration of the initial mixture (3) of epihalohydrin and solvent is from 50 to 90 percent by weight epihalohydrin based upon the combined weight of epihalohydrin and solvent;
(b) the concentration of epihalohydrin in the mixture (1) of epihalohydrin, one or more compounds having an average of more than one group reactive with a vicinal epoxide group and one or more solvents is from 10 to 90 percent by weight based upon the combined weight of the components in the mixture (1);
(c) the concentration of compound(s) having an average of more than one group reactive with a vicinal epoxide group in the mixture (1) of epihalohydrin, one or more compounds having an average of more than one group reactive with a vicinal epoxide group and one or more solvents is from 5 to 75 percent by weight based upon the combined weight of the components in the mixture (1);
(d) the concentration of solvent(s) in the mixture (1) of epihalohydrin, one or more compounds having an average of more than one group reactive with a vicinal epoxide group and one or more solvents is from 5 to 80 percent by weight based upon the combined weight of the mixture (1); and
(e) mixture (2) is an organic or aqueous solution of an alkali metal or alkaline earth metal hydroxide and the concentration of the alkali metal or alkaline earth metal hydroxide in the water or organic solvent is from 35 to 55 percent by weight based upon the combined weight of the components in the mixture (2);
(f) mixtures (1) and (2) are added concurrently and continuously to mixture (3).

4. The process of Claim 1 wherein
(a) the concentration of the initial mixture (3) of epihalohydrin and solvent is from 60 to 80 percent by weight epihalohydrin based upon the combined weight of epihalohydrin and solvent;
(b) the concentration of epihalohydrin in the mixture (1) of epihalohydrin, one or more compounds having an average of more than one group reactive with a vicinal epoxide group and one or more solvents is from 30 to 70 percent by weight based upon the combined weight of the components in the mixture (1);
(c) the concentration of compound(s) having an average of more than one group reactive with a vicinal epoxide group in the mixture (1) of epihalohydrin, one or more compounds having an average of more than one group reactive with a vicinal epoxide group and one or more solvents is from 10 to 40 percent by weight based upon the combined weight of the components in the mixture (1);
(d) the concentration of solvent(s) in the mixture (1) of epihalohydrin, one or more compounds having an average of more than one group reactive with a vicinal epoxide group and one or more solvents is from 10 to 40 percent by weight based upon the combined weight of the components in the mixture (1); and
(e) mixture (2) is an organic or aqueous solution of an alkali metal or alkaline earth metal hydroxide and the concentration of the alkali metal or alkaline earth metal hydroxide in the water or organic solvent is from 40 to 50 percent by weight based upon the combined weight of the components in the mixture (2);
(f) mixtures (1) and (2) are added concurrently and continuously to mixture (3).

5. The process of Claim 1, 2, or 3 wherein
(a) said epihalohydrin is a compound represented by the following formula I 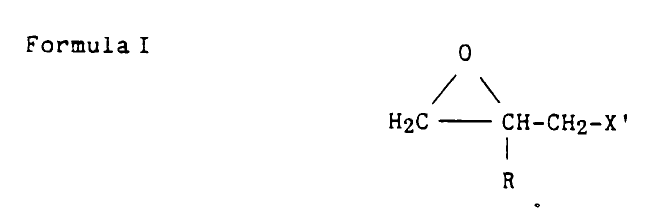 wherein R is hydrogen or a hydrocarbyl group containing from 1 to 4 carbon atoms and X' is a halogen;
(b) said one or more compounds containing an average of one or more groups reactive with a vicinal epoxide are compounds represented by the following formulas II, III, IV, V, VI or VII 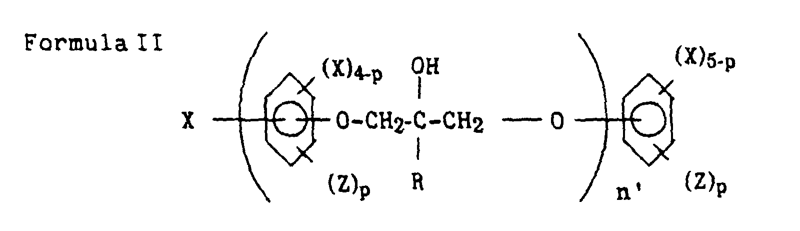 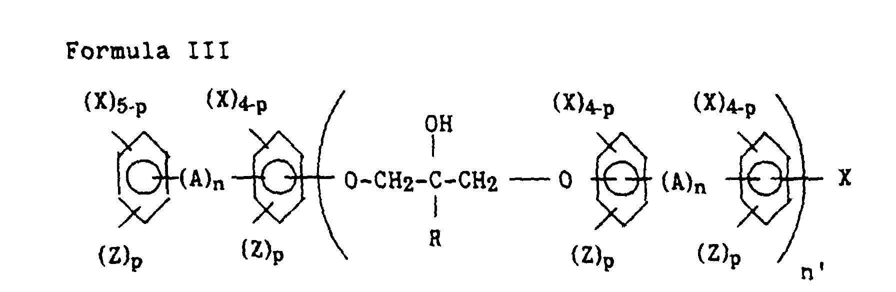 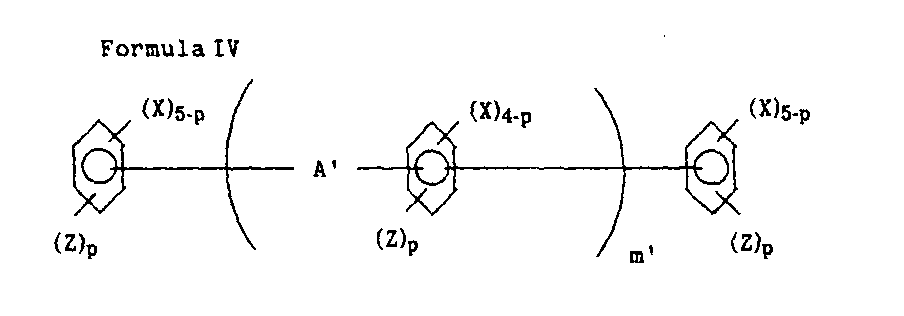 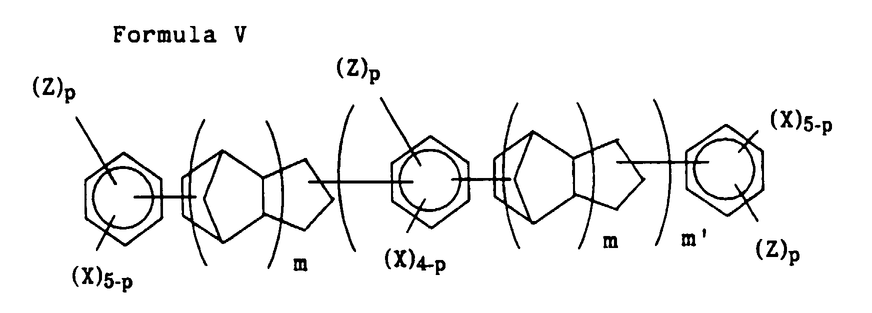 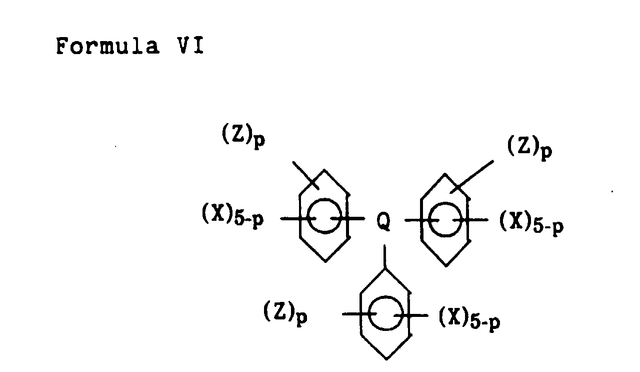 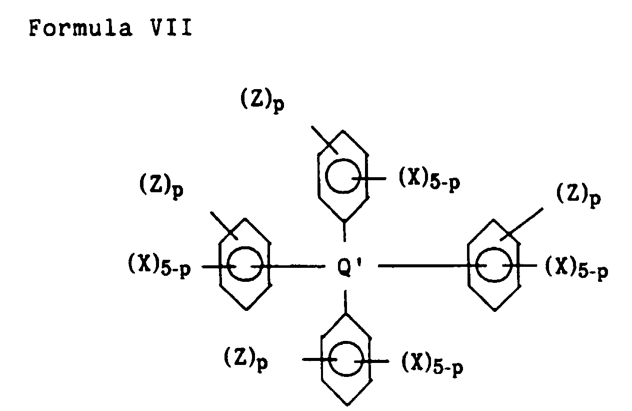 wherein each A is independently a divalent hydrocarbon group having from 1 to 20 carbon atoms, -S-, -S-S-, -O-, -SO-, -SO₂-, or -CO-; each A' is independently a divalent hydrocarbyl group having from 1 to 20 carbon atoms; Q is a trivalent aliphatic, cycloaliphatic, or aromatic hydrocarbon group having suitably from 1 to 12 carbon atoms; Q' is a tetravalent aliphatic, cycloaliphatic, or aromatic hydrocarbon group having suitably from 1 to 12 carbon atoms; each R is independently hydrogen or an alkyl group having from 1 to 4 carbon atoms; each X is independently hydrogen, a hydrocarbyl or hydrocarbyloxy group having from 1 to 12 carbon atoms or a halogen atom; each Z is independently a hydroxyl, amino or carboxyl group; m has an average value from 1 to 20; each m' has an average value from 1 to 20; n has a value of zero or 1; n' has an average value from zero to 15 and p has a value of 1 or 2;
(c) said alkali metal or alkaline earth metal hydroxide is sodium hydroxide, potassium hydroxide, lithium hydroxide, barium hydroxide, calcium hydroxide, magnesium hydroxide, or any combination thereof and is employed as an aqueous solution;
(d) the solvent employed in mixture (1) is 1-methoxy-2-hydroxy propane, cyclohexanol, dioxane, 1,2-diethoxyethane, 2-methoxyethyl ether, tertiary amyl alcohol, methyl ethyl ketone, methyl isobutyl ketone, isoamyl acetate, isobutyl acetate, toluene, dimethyl sulfoxide, dimethylacetamide, dimethylformamide, or any combination thereof; and
(e) the solvent employed in the initial mixture (3) is 1-methoxy-2-hydroxy propane, cyclohexanol, dioxane, 1,2-diethoxyethane, 2-methoxyethyl ether, tertiary amyl alcohol, methyl ethyl ketone, methyl isobutyl ketone, isoamyl acetate, isobutyl acetate, toluene, dimethyl sulfoxide, dimethylacetamide, dimethylformamide, or any combination thereof.

6. The process of Claim 5 wherein
(a) said epihalohydrin is epichlorohydrin, epibromohydrin, epiiodohydrin, methylepichlorohydrin, methylepibromohydrin, methylepiiodohydrin, or any combination thereof;
(b) said compound containing an average of more than one group reactive with a vicinal epoxide group per molecule is a compound or mixture of compounds represented by formulas III, IV, V or VI wherein each A is independently a divalent hydrocarbon group having from 1 to 12 carbon atoms; each A' is independently a divalent hydrocarbon group having from 1 to 12 carbon atoms; each R is hydrogen; m has an average value from 1 to 3; m' has an average value from zero to 10; and n' has an average value from zero to 10;
(c) said alkali or alkaline earth metal hydroxide is sodium hydroxide, potassium hydroxide, lithium hydroxide, barium hydroxide calcium hydroxide or any combination thereof;
(d) the solvent employed in mixture (1) is 1-methoxy-2-hydroxy propane, cyclohexanol, dioxane, 1,2-diethoxyethane, 2-methoxyethyl ether, tertiary amyl alcohol, dimethyl sulfoxide, dimethylacetamide, or any combination thereof; and
(e) the solvent employed in the initial mixture (3) is 1-methoxy-2-hydroxy propane, cyclohexanol, dioxane, 1,2-diethoxyethane, 2-methoxyethyl ether, tertiary amyl alcohol, dimethyl sulfoxide, dimethylacetamide, or any combination thereof.

7. The process of Claim 6 wherein
(a) said epihalohydrin is epichlorohydrin, epibromohydrin, epiiodohydrin or any combination thereof;
(b) said compound containing an average of more than one group reactive with a vicinal epoxide group per molecule is bisphenol A, bisphenol F, bisphenol K, bisphenol S, tris-(phenol)-methine, phenol formaldehyde novolac resin, cresol formaldehyde novolac resin, dicyclopentadiene phenol resin, dicyclopentadiene cresol resin, or any combination thereof; and
(c) said alkali or alkaline earth metal hydroxide is sodium hydroxide, potassium hydroxide, lithium hydroxide or any combination thereof.

8. The process of Claim 7 wherein
(a) said epihalohydrin is epichlorohydrin;
(b) said compound containing an average of more than one group reactive with a vicinal epoxide group per molecule is bisphenol A, tris-(phenol)-methine, phenol formaldehyde novolac resin, cresol formaldehyde novolac resin or any combination thereof;
(c) said alkali or alkaline earth metal hydroxide is sodium hydroxide;
(d) the solvent employed in mixture (1) is 1-methoxy-2-hydroxypropane, tertiary amyl alcohol, dimethylsulfoxide or any combination thereof; and
(e) the solvent employed in the initial mixture (3) is 1-methoxy-2-hydroxypropane, tertiary amyl alcohol, dimethylsulfoxide or any combination thereof.

9. The process of any of claims 1 to 8 wherein the ratio of moles of epihalohydrin per group reactive with an epoxide group is from 1.5:1 to 12:1.

10. The process of any of claims 1 to 8 wherein the ratio of moles of epihalohydrin per group reactive with an epoxide group is from 1.5:1 to 10:1.

11. The process of any of claims 1 to 10 wherein the addition of mixture (1) is completed before completion of the addition of mixture (2).

## Patentansprüche

1. Verfahren zur Herstellung von Epoxidharzen, bei dem man, entweder gleichzeitig und kontinuierlich oder gleichzeitig und mit Unterbrechungen, zusetzt
(1) ein Gemisch aus (a) einem Epihalogenhydrin, (b) einer oder mehreren Verbindungen mit durchschnittlich mehr als einer Gruppe, die mit einer vicinalen Epoxidgruppe reaktiv ist, und (c) einem oder mehreren Lösungsmitteln; und
(2) ein Gemisch aus (d) einem oder mehreren Alkali- oder Erdalkalimetallhydroxiden oder Manganhydroxid und (e) Wasser oder einem organischen Lösungsmittel; zu
(3) einem Gemisch, das (f) ein Epihalogenhydrin und (g) ein oder mehrere Lösungsmittel enthält; und
(4) die Komponenten (a,f) mit der Komponente (b) in Gegenwart eines oder mehrerer Lösungsmittel sowie der Komponente (d) umsetzt und dabei durch Codestillation von Wasser, Epihalogenhydrin und Lösungsmittel Wasser aus dem Reaktionsgemisch entfernt;
mit der Maßgabe, daß (i) das Epihalogenhydrin und die Komponente mit Gruppen, die mit einer vicinalen Epoxidgruppe reaktiv sind, in Mengen verwendet werden, die ein Verhältnis von Molen Epihalogenhydrin pro Gruppe, die mit einer Epoxidgruppe reaktiv ist, von 1:1 bis 15:1 ergeben.

2. Verfahren nach Anspruch 1, wobei
(a) die Konzentration des Epihalogenhydrins in dem Ausgangsgemisch (3) aus Epihalogenhydrin und Lösungsmittel 20 bis 95 Gewichtsprozent beträgt, bezogen auf das vereinigte Gewicht von Epihalogenhydrin und Lösungsmittel;
(b) die Konzentration des Epihalogenhydrins in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 10 bis 90 Gewichtsprozent beträgt, bezogen auf das vereinigte Gewicht der Komponenten in dem Gemisch (1);
(c) die Konzentration der Verbindung(en) mit durchschnittlich mehr als einer Gruppe, die mit einer vicinalen Epoxidgruppe reaktiv ist, in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 5 bis 75 Gewichtsprozent beträgt, bezogen auf das vereinigte Gewicht der Komponenten in dem Gemisch (1);
(d) die Konzentration des Lösungsmittels oder der Lösungsmittel in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 5 bis 80 Gewichtsprozent beträgt, bezogen auf das vereinigte Gewicht der Komponenten in dem Gemisch (1);
(e) das Gemisch (2) eine organische oder wäßrige Lösung eines Alkalimetall- oder Erdalkalimetallhydroxids ist und die Konzentration des Alkalimetall- oder Erdalkalimetallhydroxids in dem Wasser oder dem organischen Lösungsmittel 30 bis 60 Gewichtsprozent beträgt, bezogen auf das vereinigte Gewicht der Komponenten des Gemisches (2);
(f) die Gemische (1) und (2) gleichzeitig und kontinuierlich dem Gemisch (3) zugeführt werden.

3. Verfahren nach Anspruch 1, wobei
(a) die Konzentration des Epihalogenhydrins in dem Ausgangsgemisch (3) aus Epihalogenhydrin und Lösungsmittel 50 bis 90 Gewichtsprozent beträgt, bezogen auf das vereinigte Gewicht von Epihalogenhydrin und Lösungsmittel;
(b) die Konzentration des Epihalogenhydrins in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 10 bis 90 Gewichtsprozent beträgt, bezogen auf das vereinigte Gewicht der Komponenten in dem Gemisch (1);
(c) die Konzentration der Verbindung(en) mit durchschnittlich mehr als einer Gruppe, die mit einer vicinalen Epoxidgruppe reaktiv ist, in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 5 bis 75 Gewichtsprozent beträgt, bezogen auf das vereinigte Gewicht der Komponenten in dem Gemisch (1);
(d) die Konzentration des Lösungsmittels oder der Lösungsmittel in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 5 bis 80 Gewichtsprozent beträgt, bezogen auf das vereinigte Gewicht des Gemisches (1); und
(e) das Gemisch (2) eine organische oder wäßrige Lösung eines Alkalimetall- oder Erdalkalimetallhydroxids ist und die Konzentration des Alkalimetall- oder Erdalkalimetallhydroxids in dem Wasser oder dem organischen Lösungsmittel 35 bis 55 Gewichtsprozent beträgt, bezogen auf das vereinigte Gewicht der Komponenten in dem Gemisch (2);
(f) die Gemische (1) und (2) gleichzeitig und kontinuierlich dem Gemisch (3) zugeführt werden.

4. Verfahren nach Anspruch 1, wobei
(a) die Konzentration des Epihalogenhydrins in dem Ausgangsgemisch (3) aus Epihalogenhydrin und Lösungsmittel 60 bis 80 Gewichtsprozent beträgt, bezogen auf das vereinigte Gewicht von Epihalogenhydrin und Lösungsmittel;
(b) die Konzentration des Epihalogenhydrins in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 30 bis 70 Gewichtsprozent beträgt, bezogen auf das vereinigte Gewicht der Komponenten in dem Gemisch (1);
(c) die Konzentration der Verbindung(en) mit durchschnittlich mehr als einer Gruppe, die mit einer vicinalen Epoxidgruppe reaktiv ist, in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 10 bis 40 Gewichtsprozent beträgt, bezogen auf das vereinigte Gewicht der Komponenten in dem Gemisch (1);
(d) die Konzentration des Lösungsmittels oder der Lösungsmittel in dem Gemisch (1) aus Epihalogenhydrin, einer oder mehreren Verbindungen mit durchschnittlich mehr als einer Gruppe, die mit einer vicinalen Epoxidgruppe reaktiv ist, und einem oder mehreren Lösungsmitteln 10 bis 40 Gewichtsprozent beträgt, bezogen auf das vereinigte Gewicht der Komponenten in dem Gemisch (1); und
(e) das Gemisch (2) eine organische oder wäßrige Lösung eines Alkalimetall- oder Erdalkalimetallhydroxids ist und die Konzentration des Alkalimetall- oder Erdalkalimetallhydroxids in dem Wasser oder dem organischen Lösungsmittel 40 bis 50 Gewichtsprozent beträgt, bezogen auf das vereinigte Gewicht der Komponenten in dem Gemisch (2);
(f) die Gemische (1) und (2) gleichzeitig und kontinuierlich dem Gemisch (3) zugeführt werden.

5. Verfahren nach den Ansprüchen 1, 2 oder 3, wobei
(a) das Epihalogenhydrin eine Verbindung ist, die durch die folgende Formel I: 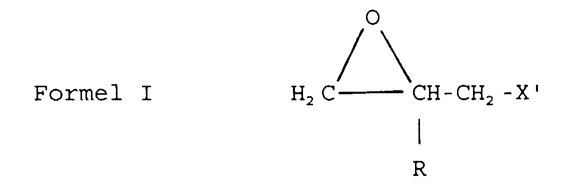 wiedergegeben wird, in der R Wasserstoff oder einen Kohlenwasserstoffrest mit 1 bis 4 Kohlenstoffatomen bezeichnet und X' für ein Halogenatom steht;
(b) die Verbindung(en) mit durchschnittlich einer oder mehreren Gruppen, die mit einer vicinalen Epoxidgruppe reaktiv sind, Verbindungen sind, die durch die folgenden Formeln II, III, IV, V, VI oder VII wiedergegeben werden: 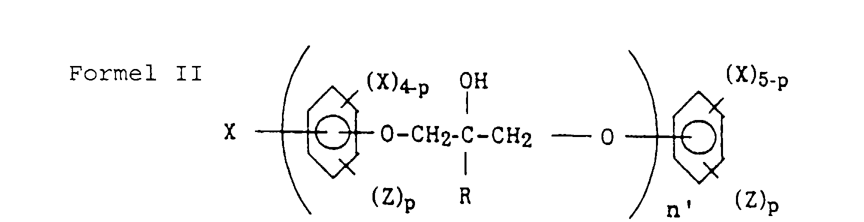 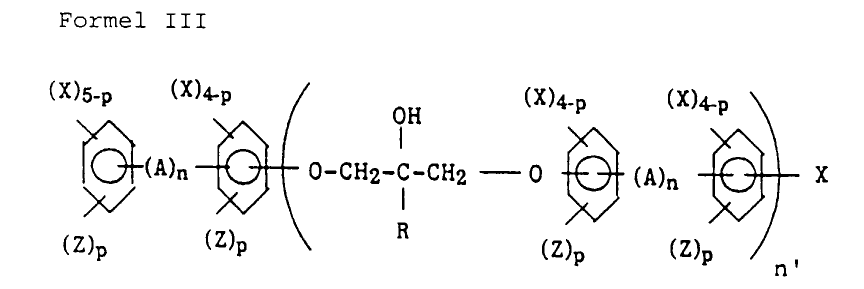 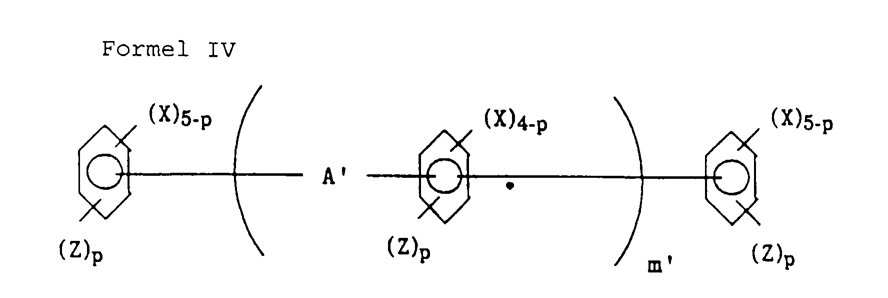 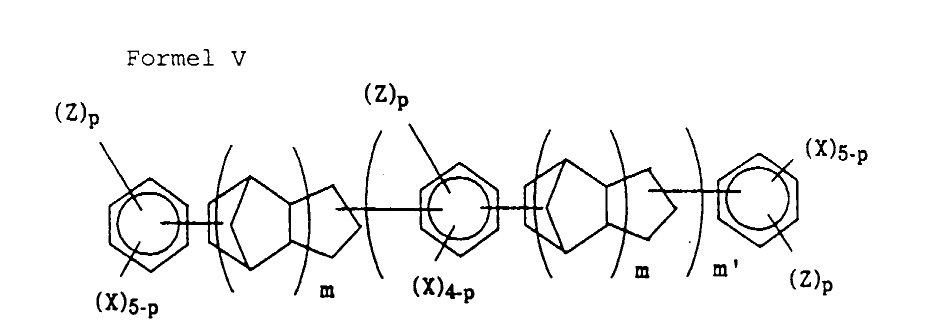 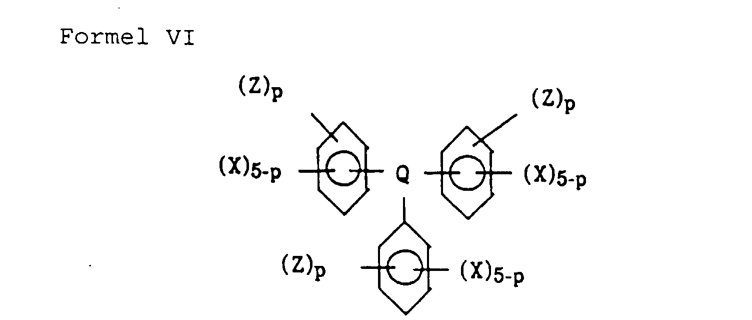 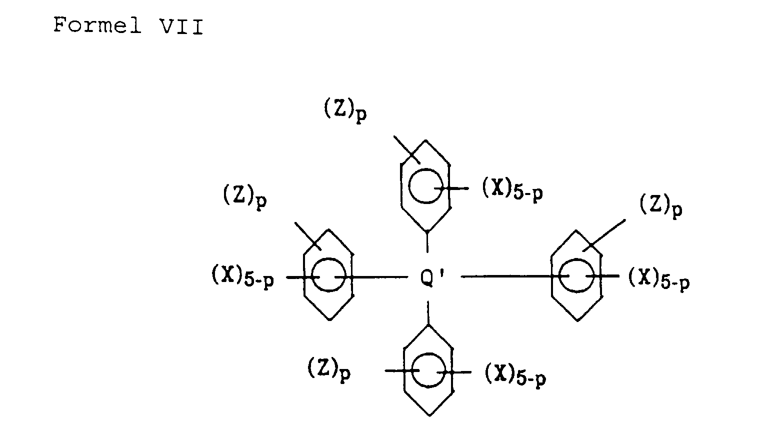 in denen A jeweils unabhängig einen zweiwertigen Kohlenwasserstoffrest mit 1 bis 20 Kohlenstoffatomen, -S-, -S-S-, -O-, -SO-, -SO₂- oder -CO- bedeutet; A' jeweils unabhängig einen zweiwertigen Kohlenwasserstoffrest mit 1 bis 20 Kohlenstoffatomen bedeutet; Q einen dreiwertigen aliphatischen, cycloaliphatischen oder aromatischen Kohlenwasserstoffrest mit zweckmäßig 1 bis 12 Kohlenstoffatomen bezeichnet; Q' einen vierwertigen aliphatischen, cycloaliphatischen oder aromatischen Kohlenwasserstoffrest mit zweckmäßig 1 bis 12 Kohlenstoffatomen bezeichnet; R jeweils unabhängig für Wasserstoff oder einen Alkylrest mit 1 bis 4 Kohlenstoffatomen steht; X jeweils unabhängig Wasserstoff, einen Kohlenwasserstoffrest oder einen über Sauerstoff gebundenen Kohlenwasserstoffrest mit 1 bis 12 Kohlenstoffatomen oder ein Halogenatom bezeichnet; Z jeweils unabhängig eine Hydroxyl-, Amino- oder Carboxylgruppe bedeutet; m einen durchschnittlichen Wert von 1 bis 20 hat; m' jeweils einen durchschnittlichen Wert von 1 bis 20 hat; n einen Wert von 0 oder 1 hat; n' einen durchschnittlichen Wert von 0 bis 15 hat und p einen Wert von 1 oder 2 hat;
(c) das Alkalimetall- oder Erdalkalimetallhydroxid Natriumhydroxid, Kaliumhydroxid, Lithiumhydroxid, Bariumhydroxid, Calciumhydroxid, Magnesiumhydroxid oder eine Kombination dieser Stoffe ist und als wässerige Lösung angewandt wird;
(d) das in dem Gemisch (1) verwendete Lösungsmittel 1-Methoxy-2-hydroxypropan, Cyclohexanol, Dioxan, 1,2-Diethoxyethan, 2-Methoxyethylether, tert.-Amylalkohol, Methylethylketon, Methylisobutylketon, Isoamylacetat, Isobutylacetat, Toluol, Dimethylsulfoxid, Dimethylacetamid, Dimethylformamid oder eine beliebige Kombination aus diesen Lösungsmitteln ist; und
(e) das in dem Ausgangsgemisch (3) verwendete Lösungsmittel 1-Methoxy-2-hydroxypropan, Cyclohexanol, Dioxan, 1,2-Diethoxyethan, 2-Methoxyethylether, tert.-Amylalkohol, Methylethylketon, Methylisobutylketon, Isoamylacetat, Isobutylacetat, Toluol, Dimethylsulfoxid, Dimethylacetamid, Dimethylformamid oder eine beliebige Kombination aus diesen Lösungsmitteln ist.

6. Verfahren nach Anspruch 5, wobei
(a) das Epihalogenhydrin Epichlorhydrin, Epibromhydrin, Epiiodhydrin, Methylepichlorhydrin, Methylepibromhydrin, Methylepiiodhydrin oder eine beliebige Kombination aus diesen Stoffen ist;
(b) die Verbindung mit pro Molekül durchschnittlich mehr als einer Gruppe, die mit einer vicinalen Epoxidgruppe reaktiv ist, eine Verbindung oder ein Gemisch von Verbindungen ist, die durch die Formeln III, IV, V oder VI wiedergegeben werden, wobei A jeweils unabhängig einen zweiwertigen Kohlenwasserstoffrest mit 1 bis 12 Kohlenstoffatomen bedeutet; A' jeweils unabhängig einen zweiwertigen Kohlenwasserstoffrest mit 1 bis 12 Kohlenstoffatomen bezeichnet; R jeweils Wasserstoff bedeutet; m einen durchschnittlichen Wert von 1 bis 3 hat; m' einen durchschnittlichen Wert von 0 bis 10 hat; und n' einen durchschnittlichen Wert von 0 bis 10 hat;
(c) das Alkali- oder Erdalkalimetallhydroxid Natriumhydroxid, Kaliumhydroxid, Lithiumhydroxid, Bariumhydroxid, Calciumhydroxid oder eine beliebige Kombination aus diesen Hydroxiden ist;
(d) das in dem Gemisch (1) verwendete Lösungsmittel 1-Methoxy-2-hydroxypropan, Cyclohexanol, Dioxan, 1,2-Diethoxyethan, 2-Methoxyethylether, tert.-Amylalkohol, Dimethylsulfoxid, Dimethylacetamid oder eine beliebige Kombination aus diesen Lösungsmitteln ist; und
(e) das in dem Ausgangsgemisch (3) verwendete Lösungsmittel 1-Methoxy-2-hydroxypropan, Cyclohexanol, Dioxan, 1,2-Diethoxyethan, 2-Methoxyethylether, tert.-Amylalkohol, Dimethylsulfoxid, Dimethylacetamid oder eine beliebige Kombination aus diesen Lösungsmitteln ist.

7. Verfahren nach Anspruch 6, wobei
(a) das Epihalogenhydrin Epichlorhydrin, Epibromhydrin, Epiiodhydrin oder eine beliebige Kombination aus diesen Stoffen ist;
(b) die Verbindung mit pro Molekül durchschnittlich mehr als einer Gruppe, die mit einer vicinalen Epoxidgruppe reaktiv ist, Bisphenol A, Bisphenol F, Bisphenol K, Bisphenol S, Tris-(phenol)-methin, ein Phenol-Formaldehyd-Novolakharz, ein Kresol-Formaldehyd-Novolakharz, ein Dicyclopentadien-Phenol-Harz, ein Dicyclopentadien-Kresol-Harz oder ein beliebiges Gemisch aus diese Stoffen ist; und
(c) das Alkali- oder Erdalkalimetallhydroxid Natriumhydroxid, Kaliumhydroxid, Lithiumhydroxid oder eine beliebige Kombination aus diese Hydroxiden ist.

8. Verfahren nach Anspruch 7, wobei
(a) das Epihalogenhydrin Epichlorhydrin ist;
(b) die Verbindung mit pro Molekül durchschnittlich mehr als einer Gruppe, die mit einer vicinalen Epoxidgruppe reaktiv ist, Bisphenol A, Tris-(phenol)-methin, ein Phenol-Formaldehyd-Novolakharz, ein Kresol-Formaldehyd-Novolakharz oder ein beliebiges Gemisch aus diesen Stoffen ist;
(c) das Alkali- oder Erdalkalimetallhydroxid Natriumhydroxid ist;
(d) das in dem Gemisch (1) verwendete Lösungsmittel 1-Methoxy-2-hydroxypropan, tert.-Amylalkohol, Dimethylsulfoxid oder eine beliebige Kombination aus diesen Lösungsmitteln ist; und
(e) das in dem Ausgangsgemisch (3) verwendete Lösungsmittel 1-Methoxy-2-hydroxypropan, tert.-Amylalkohol, Dimethylsulfoxid oder eine beliebige Kombination aus diesen Lösungsmitteln ist.

9. Verfahren nach einem der Ansprüche 1 bis 8, wobei das Verhältnis von Molen Epihalogenhydrin pro Gruppe, die mit einer Epoxidgruppe reaktiv ist, 1,5:1 bis 12:1 beträgt.

10. Verfahren nach einem der Ansprüche 1 bis 8, wobei das Verhältnis von Molen Epihalogenhydrin pro Gruppe, die mit einer Epoxidgruppe reaktiv ist, 1,5:1 bis 10:1 beträgt.

11. Verfahren nach einem der Ansprüche 1 bis 10, wobei die Zugabe des Gemisches (1) vor der Beendigung der Zugabe des Gemisches (2) beendet ist.

## Revendications

1. Procédé pour la préparation de résines époxydes, qui comprend l'addition, soit en même temps et en continu, soit en même temps et de manière intermittente,
(1) d'un mélange (a) d'épihalohydrine, (b) d'un ou plusieurs composés ayant une moyenne de plus d'un groupe réagissant avec un groupe époxyde adjacent et (c) d'un ou plusieurs solvants, et
(2) d'un mélange (d) d'un ou plusieurs hydroxydes alcalins ou alcalino-terreux ou d'hydroxyde de manganèse et (e) d'eau ou d'un solvant organique, à
(3) un mélange contenant (f) une épihalohydrine et (g) un ou plusieurs solvants, et
(4) la réaction des composants (a, f) avec le composant (b) en présence d'un ou plusieurs solvants et du composant (d), tout en éliminant l'eau du mélange de réaction par co-distillation de l'eau, de l'épihalohydrine et d'un solvant ;
étant entendu que (i) l'épihalohydrine et le composé ayant des groupes réagissant avec un groupe époxyde adjacent sont employés en proportions donnant un rapport en moles épihalohydrine/groupes réagissant avec un groupe époxide compris entre 1:1 et 15:1.

2. Procédé selon la revendication 1, dans lequel
(a) la concentration du mélange initial (3) d'épihalohydrine et de solvant est de 20 à 95 pour-cent en poids d'épihalohydrine sur la base du poids combiné d'épihalohydrine et de solvant,
(b) la concentration d'épihalohydrine dans le mélange (1) d'épihalohydrine, d'un ou plusieurs composés ayant une moyenne de plus d'un groupe réagissant avec un groupe époxyde adjacent et d'un ou plusieurs solvants est de 10 à 90 pour-cent en poids sur la base du poids combiné des composants dans le mélange (1),
(c) la concentration du (des) composé(s) ayant une moyenne de plus d'un groupe réagissant avec un groupe époxyde adjacent dans le mélange (1) d'épihalohydrine, d'un ou plusieurs composés ayant une moyenne de plus d'un groupe réagissant avec un groupe époxyde adjacent et d'un ou plusieurs solvants est de 5 à 75 pour-cent en poids sur la base du poids combiné des composants dans le mélange (1),
(d) la concentration de solvant(s) dans le mélange (1) d'épihalohydrine, d'un ou plusieurs composés ayant une moyenne de plus d'un groupe réagissant avec un groupe époxyde adjacent et d'un ou plusieurs solvants est de 5 à 80 pour-cent en poids sur la base du poids combiné des composants dans le mélange (1),
(e) le mélange (2) est une solution organique ou aqueuse d'un hydroxyde alcalin ou alcalino-terreux et la concentration de l'hydroxyde alcalin ou alcalino-terreux dans l'eau ou le solvant organique est de 30 à 60 pour-cent en poids sur la base du poids combiné des composants dans le mélange (2),
(f) les mélanges (1) et (2) sont ajoutés en même temps et en continu au mélange (3).

3. Procédé selon la revendication 1, dans lequel
(a) la concentration du mélange initial (3) d'épihalohydrine et de solvant est de 50 à 90 pour-cent en poids d'épihalohydrine sur la base du poids combiné d'épihalohydrine et de solvant,
(b) la concentration d'épihalohydrine dans le mélange (1) d'épihalohydrine, d'un ou plusieurs composés ayant une moyenne de plus d'un groupe réagissant avec un groupe époxyde adjacent et d'un ou plusieurs solvants est de 10 à 90 pour-cent en poids sur la base du poids combiné des composants dans le mélange (1),
(c) la concentration de composé(s) ayant une moyenne de plus d'un groupe réagissant avec un groupe époxyde adjacent dans le mélange (1) d'épihalohydrine, d'un ou plusieurs composés ayant une moyenne de plus d'un groupe réagissant. avec un groupe époxyde adjacent et d'un ou plusieurs solvants est de 5 à 75 pour-cent en poids sur la base du poids combiné des composants dans le mélange (1),
(d) la concentration de solvant(s) dans le mélange (1) d'épihalohydrine, d'un ou plusieurs composés ayant une moyenne de plus d'un groupe réagissant avec un groupe époxyde adjacent et d'un ou plusieurs solvants est de 5 à 80 pour-cent en poids sur la base du poids combiné des composants dans le mélange (1), et
(e) le mélange (2) est une solution organique ou aqueuse d'un hydroxyde alcalin ou alcalino-terreux et la concentration de l'hydroxyde alcalin ou alcalino-terreux dans l'eau ou le solvant organique est de 35 à 55 pour-cent en poids sur la base du poids combiné des composants dans le mélange (2),
(f) les mélanges (1) et (2) sont ajoutés en même temps et en continu au mélange (3).

4. Procédé selon la revendication 1, dans lequel
(a) la concentration du mélange initial (3) d'épihalohydrine et de solvant est de 60 à 80 pour-cent en poids d'épihalohydrine sur la base du poids combiné d'épihalohydrine et de solvant,
(b) la concentration d'épihalohydrine dans le mélange (1) d'épihalohydrine, d'un ou plusieurs composés ayant une moyenne de plus d'un groupe réagissant avec un groupe époxyde adjacent et d'un ou plusieurs solvants est de 30 à 70 pour-cent en poids sur la base du poids combiné des composants dans le mélange (1),
(c) la concentration de composé(s) ayant une moyenne de plus d'un groupe réagissant avec un groupe époxyde adjacent dans le mélange (1) d'épihalohydrine, d'un ou plusieurs composés ayant une moyenne de plus d'un groupe réagissant avec un groupe époxyde adjacent et d'un ou plusieurs solvants est de 10 à 40 pour-cent en poids sur la base du poids combiné des composants dans le mélange (1),
(d) la concentration de solvant(s) dans le mélange (1) d'épihalohydrine, d'un ou plusieurs composés ayant une moyenne de plus d'un groupe réagissant avec un groupe époxyde adjacent et d'un ou plusieurs solvants est de 10 à 40 pour-cent en poids sur la base du poids combiné des composants dans le mélange (1), et
(e) le mélange (2) est une solution organique ou aqueuse d'un hydroxyde alcalin ou alcalino-terreux et la concentration de l'hydroxyde alcalin ou alcalino-terreux dans l'eau ou le solvant organique est de 40 à 50 pour-cent en poids sur la base du poids combiné des composants dans le mélange (2),
(f) les mélanges (1) et (2) sont ajoutés en même temps et en continu au mélange (3).

5. Procédé selon l'une des revendications 1, 2 ou 3, dans lequel
(a) ladite épihalohydrine est un composé représenté par la formule I suivante: Formule I 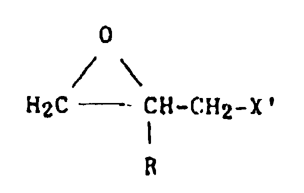 où R est hydrogène ou un groupe hydrocarbyle contenant de 1 à 4 atomes de carbone et X' est un halogène,
(b) lesdits un ou plusieurs composés contenant une moyenne d'un ou plusieurs groupes réagissant avec un époxyde adjacent sont des composés représentés par les formules II, III, IV, V, VI ou VII suivantes: 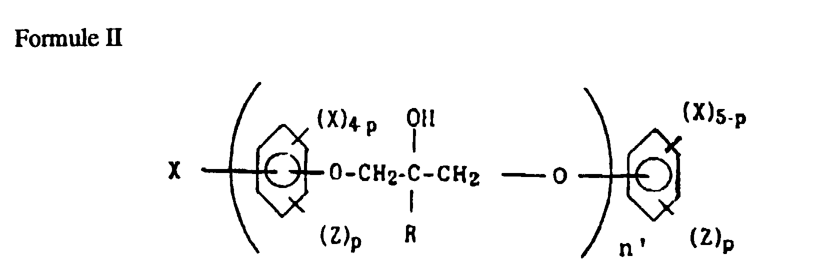 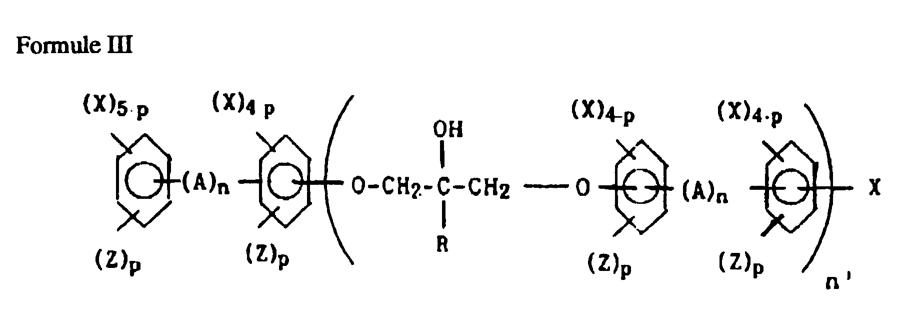 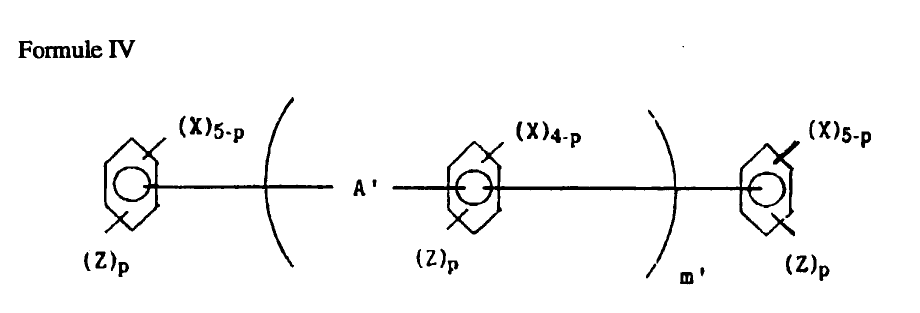 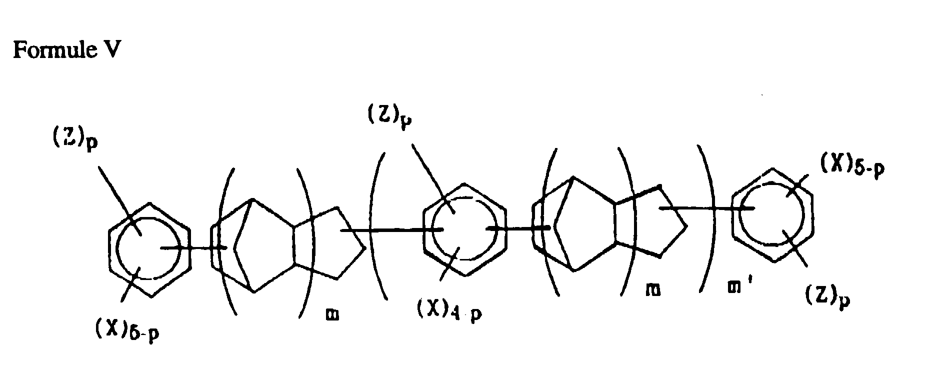 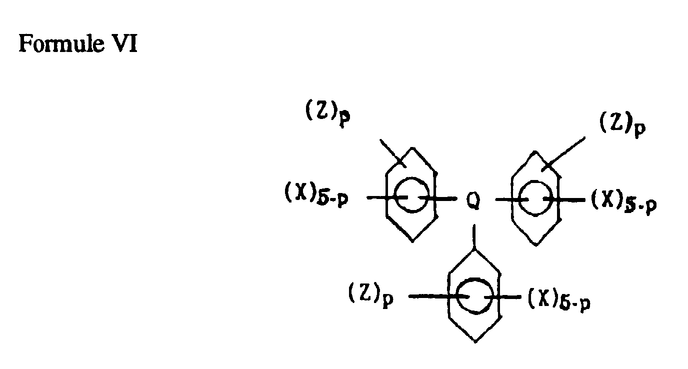 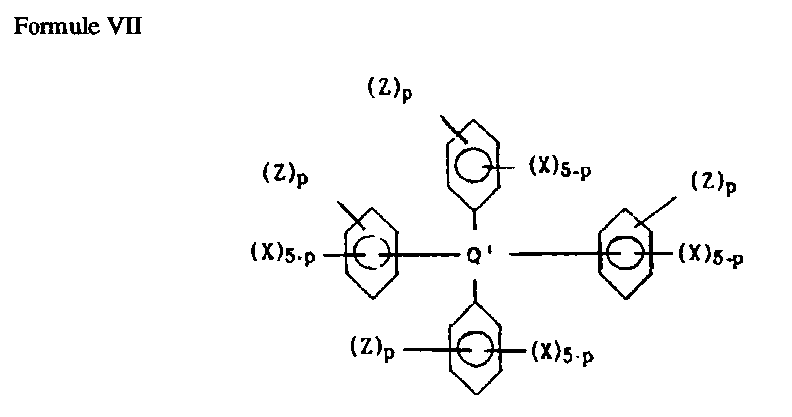 où chaque A est indépendamment un groupe hydrocarbure divalent ayant de 1 à 20 atomes de carbone, -S-, -S-S-, -O-, -SO-, SO₂- ou -CO-, chaque A' est indépendamment un groupe hydrocarbyle divalentayant de 1 à 20 atomes de carbone, Q est un groupe hydrocarbure aliphatique, cycloaliphatique ou aromatique trivalent ayant, de manière appropriée, de 1 à 12 atomes de carbone, chaque R est indépendamment hydrogène ou un groupe alcoyle ayant de 1 à 4 atomes de carbone, chaque X est indépendamment hydrogène, un groupe hydrocarbyle ou hydrocarbyloxy ayant de 1 à 12 atomes de carbone ou un atome halogène, chaque Z est indépendamment un groupe hydroxyle, amino ou carboxyle, m a une valeur moyenne de 1 à 20, chaque m' a une valeur moyenne de 1 à 20, n a une valeur de 0 ou 1, n' a une valeur moyenne de zéro à 15 et p a une valeur de 1 ou 2,
(c) ledit hydroxyde alcalin ou alcalino-terreux est l'hydroxyde de sodium, l'hydroxyde de potassium, l'hydroxyde de lithium, l'hydroxyde de baryum, l'hydroxyde de calcium, l'hydroxyde de magnésium ou toute combinaison de ceux-ci et est utilisé en solution aqueuse,
(d) le solvant utilisé dans le mélange (1) est le 1-méthoxy-2-hydroxypropane, le cyclohexanol, le dioxane, le 1,2-diéthoxyéthane, l'éther 2-méthoxyéthylique, l'alcool amylique tertiaire, la méthyléthylcétone, la méthylisobutylcétone, l'acétate d'isoamyle, l'acétate d'isobutyle, le toluène, le sulfoxyde de diméthyle, le diméthylacétamide, le diméthylformamide ou toute combinaison de ceux-ci, et
(e) le solvant utilisé dans le mélange initial (3) est le 1-méthoxy-2-hydroxypropane, le cyclohexanol, le dioxane, le 1,2-diéthoxyéthane, l'éther 2-méthoxyéthylique, l'alcool amylique tertiaire, la méthyléthylcétone, la méthylisobutylcétone, l'acétate d'isoamyle, l'acétate d'isobutyle, le toluène, le sulfoxyde de diméthyle, le diméthylacétamide, le diméthylformamide ou toute combinaison de ceux-ci.

6. Procédé selon la revendication 5, dans lequel
(a) ladite épihalohydrine est l'épichlorhydrine, l'épibromohydrine, l'épi-iodohydrine, la méthylépichlorhydrine, la méthylépibromohydrine, la méthylépi-iodohydrine ou toute combinaison de celles-ci,
(b) ledit composé contenant une moyenne de plus d'un groupe réagissant avec un groupe époxyde adjacent par molécule est un composé ou mélange de composés représentés par les formules III, IV, V ou VI où chaque A est indépendamment un groupe hydrocarbure divalent ayant de 1 à 12 atomes de carbone, chaque A'est indépendamment un groupe hydrocarbure divalent ayant de 1 à 12 atomes de carbone, chaque R est hydrogène, m a une valeur moyenne de 1 à 3, m' a une valeur moyenne de zéro à 10 et n' a une valeur moyenne de zéro à 10,
(c) ledit hydroxyde alcalin ou alcalino-terreux est l'hydroxyde de sodium, l'hydroxyde de potassium, l'hydroxyde de lithium, l'hydroxyde de baryum, l'hydroxyde de calcium ou toute combinaison de ceux-ci,
(d) le solvant utilisé dans le mélange (1) est le 1-méthoxy-2-hydroxypropane, le cyclohexanol, le dioxane, le 1,2-diéthoxyéthane, l'éther 2-méthoxyéthylique, l'alcool amylique tertiaire, le sulfoxyde de diméthyle, le diméthylacétamide ou toute combinaison de ceux-ci, et
(e) le solvant utilisé dans le mélange initial (3) est le 1-méthoxy-2-hydroxypropane, le cyclohexanol, le dioxane, le 1,2-diéthoxyéthane, l'éther 2-méthoxyéthylique, l'alcool amylique tertiaire, le sulfoxyde de diméthyle, le diméthylacétamide ou toute combinaison de ceux-ci.

7. Procédé selon la revendication 6, dans lequel
(a) ladite épihalohydrine est l'épichlorhydrine, l'épibromohydrine, l'épi-iodohydrine ou toute combinaison de celles-ci,
(b) ledit composé contenant une moyenne de plus d'un groupe réagissant avec un groupe époxyde adjacent par molécule est le bisphénol A, le bisphénol F, le bisphénol K, le bisphénol S, la tris-(phénol)-méthine, la résine novolac de phénol-formaldéhyde, la résine novolac de crésol-formaldéhyde, la résine de dicyclopentadiène-phénol, la résine de dicyclopentadiène-crésol ou toute combinaison de ceux-ci, et
(c) ledit hydroxyde alcalin ou alcalino-terreux est l'hydroxyde de sodium, l'hydroxyde de potassium, l'hydroxyde de lithium ou toute combinaison de ceux-ci.

8. Procédé selon la revendication 7, dans lequel
(a) ladite épihalohydrine est l'épichlorhydrine,
(b) ledit composé contenant une moyenne de plus d'un groupe réagissant avec un groupe époxyde adjacent par molécule est le bisphénol A, la tris-(phénol)-méthine, la résine novolac de phénol-formaldéhyde, la résine novolac de crésol-formaldéhyde ou toute combinaison de ceux-ci,
(c) ledit hydroxyde de métal alcalin ou alcalino-terreux est l'hydroxyde de sodium,
(d) le solvant utilisé dans le mélange (1) est le 1-méthoxy-2-hydroxypropane, l'alcool amylique tertiaire, le sulfoxyde de diméthyle ou toute combinaison de ceux-ci, et
(e) le solvant utilisé dans le mélange initial (3) est le 1-méthoxy-2-hydroxypropane, l'alcool amylique tertiaire, le sulfoxyde de diméthyle ou toute combinaison de ceux-ci.

9. Procédé selon l'une des revendications 1 à 8, dans lequel le rapport des moles d'épihalohydrine aux groupes réagissant avec un groupe époxyde est de 1,5:1 à 12:1.

10. Procédé selon l'une des revendications 1 à 8, dans lequel le rapport des moles d'épihalohydrine aux groupes réagissant avec un groupe époxyde est de 1,5:1 à 10:1.

11. Procédé selon l'une des revendications 1 à 10, dans lequel l'addition du mélange (1) est achevée avant que l'addition du mélange (2) soit complète.
